# EUROPÄISCHE PATENTSCHRIFT

(11) **EP 2 624 230 B1**
(45) Veröffentlichungstag und Bekanntmachung des Hinweises auf die Patenterteilung: **17.06.2015**
(21) Anmeldenummer: 13152975.2
(22) Anmeldetag: 29.01.2013
(51) Int. Cl.: G08G 1/015, G01S 7/41

(54) **Verfahren und Einrichtung zur Detektion von Fahrzeugachsen bei Verkehrserfassungsgeräten**
Method and device for traffic counters and classifiers to detect axles of vehicles
Procédé et dispositif pour détecter les essieux des véhicules pour les appareils de recensement de la circulation

(30) Priorität: 02.02.2012 AT 500192012
(43) Veröffentlichungstag der Anmeldung: 07.08.2013
(73) Patentinhaber: Sierzega Elektronik GmbH, 4062 Thening (AT)
(72) Erfinder: Sierzega, Robert, 4062 Thening (AT)

(56) Entgegenhaltungen:
- DE-A1- 1 962 251
- DE-A1- 2 928 907
- DE-A1-102008 037 233
- US-A- 4 275 396

## Beschreibung

### Erfindungsgebiet

Die vorliegende Erfindung betrifft ein Verfahren und eine Vorrichtung zur Detektion von Fahrzeugachsen bei Verkehrserfassungsgeräten unter Verwendung eines Radarsensors und einer Auswerteeinheit.

### Stand der Technik

Verkehrszählungen und die Klassifikation des Straßenverkehrs werden hauptsächlich mit Sensoren auf Induktionsbasis durchgeführt. Die Detektion erfolgt dabei durch Schleifen, die in den Straßenbelag eingefräst werden. Bei dieser Methode wird das Metall der darüber hinwegfahrenden Fahrzeuge detektiert.

Um die Fahrzeuge zusätzlich in verschiedene Klassen oder Kategorien einteilen zu können, werden meist zwei Schleifen hintereinander eingefräst, um die Geschwindigkeit und die Länge des Fahrzeuges ermitteln zu können. Schleifen auf Induktionsbasis haben den Vorteil, dass Fahrzeugachsen relativ einfach detektiert werden können, da der höhere Metallgehalt und der niedrigere Abstand der Achse zur Fahrbahn die Schleife deutlich verstimmt und diese Änderung der Induktiviät im Verlauf der Überfahrt des Fahrzeuges einfach ausgewertet werden kann.

Durch die etablierte Erfassungstechnik wurden in der Vergangenheit auch die Standards und Normen auf Schleifen und deren spezifischer Besonderheiten ausgelegt. Manche Prüfverfahren von Verkehrserfassungsgeräten sind rein auf Geräte mit Induktionsschleifen ausgelegt.

Schleifengeräte haben jedoch auch deutliche Nachteile: Durch die Abnützung des Straßenbelages und durch Witterungseinflüsse werden im Laufe der Monate die eingefrästen Schleifen beschädigt. Für den Einbau oder den Austausch muss jedoch der Verkehr gesperrt und eine Baustelle eingerichtet werden. Somit sind alternative Sensortechnologien, die einerseits langlebiger sind und andererseits den Verkehr von ausserhalb der Straße erfassen, von Vorteil. Zusätzlich ist eine Verkehrserfassung auf Basis von Schleifen ortsfest und damit ungeeignet für mobile Einsätze. Meist genügt eine Messung von einer Woche um die Verkehrssituation an einer Straße ausreichend abbilden zu können.

Eine derartige nicht-invasive, robuste und mobile Technologie zur Verkehrserfassung ist die Radartechnik. Erst moderne Elektronik ermöglicht durch leistungsstarke Prozessoren, wie digitaler Signalprozessoren (DSP), eine qualitativ hochwertige Verkehrserfassung, die in der Lage ist, Geräte auf Induktionsbasis zu ersetzen.

Um nun manchen Prüfverfahren und Standards für Verkehrserfassungsgeräte, sowie deren Klassifikationsschematas zu entsprechen, ist es auch für Radargeräte von Vorteil, die Achsen von Fahrzeugen oder deren Räder zu detektieren.

Um mittels Radartechnik ein drehendes Rad an einem Fahrzeug im Erfassungsbereichs zu detektieren, wird das abweichende Bewegungsmuster des Reifens gegenüber dem translatorisch bewegten Grundkörper betrachtet. Physikalisch wird dieses Bewegungsmuster des Rades durch die Rollbedingung beschrieben. Gegenüber der überwiegenden Translation am Fahrzeug ergibt sich für ein Radargerät am Straßenrand ein deutliches Merkmal für den Reifen: Ohne Schlupf bewegt sich der höchste Punkt eines rollendes Rades mit der doppelten Geschwindigkeit des Fahrzeuges in Fahrtrichtung.

Dass unterschiedliche Bewegungsmuster an einem bewegten Objekt von Radargeräten zur Klassifikation verwendet werden können, beschreibt Anmeldung DE2928907. Dabei werden in der Spektralanalyse durch Fast Fourier Transformation (FFT) bewegte Ziele durch ihre Hauptdopplerlinie identifziert. In einer Nachbetrachtung werden die zugehörigen Dopplernebenlinien untersucht und das Objekt danach klassifiziert.

Dabei wird bereits beschrieben, dass verschiedene Nebenlinien im Spektrum durch unterschiedliche Bewegungsmuster am Radarziel entstehen und jeweils diese Reflexionen für das Objekt charakteristisch sind, sodass diese Merkmale zur Klassifikation des Objektes genutzt werden können.

Doppler-Radargeräte werden bereits seit vielen Jahren zur Verkehrserfassung eingesetzt. Dabei werden meist Antennen mit spezieller Richtcharakteristik verwendet. Der Radarstrahl wird vom Straßenrand aus schräg zur Fahrtrichtung über die Fahrbahn gerichtet. Bei einer Halbwertsbreite der Antenne von meist rund 12 ° in horizontaler Ebene, rund 30 ° in vertikaler Ebene und einem Messwinkel von 30 bis 45° zur Fahrtrichtung oder Straßenachse, ist eine ausreichende Trennung der hintereinanderfahrenden Fahrzeuge möglich. Durch die Dopplersignale kann die Richtung, Geschwindigkeit und Länge der Fahrzeuge einfach ermittelt werden. Trotzdem das unterschiedliche Rotationsbewegungsmuster eines Rades zum translatorischen Bewegungsmuster des restlichen Fahrzeuges bekannt ist und die daraus resultierenden unterschiedlichen Dopplersignale der Komponenten bekannt sind, wurden bisher Fahrzeugachsen in der Signalanalyse der verschiedenen Geräte meist nicht erfasst. Die Dopplerreflexionen der Translation überwiegen dermaßen, dass bei Verwendung der meist üblichen Antennen von 12 mal 30° und der üblichen Messentfernungen von 2 bis 5 Metern vom Fahrzeug, die Signale der Achsen in der einfachen Spektralanalyse nicht mehr detektiert werden können.

Anmeldung DE102008037233 umgeht dieses Problem durch die Bündelung des Radarstrahls auf die Reifen der Fahrzeuge, um so die sonst dominierende Translation des Fahrzeuges im Dopplersignal zu unterdrücken. Die bereits früher übliche fortlaufende Spektralanalyse der Dopplersignale wird dann nach Minimas und Maximas im Geschwindigkeitsverlauf abgesucht, um Reifen und damit Fahrzeugachsen sichtbar zu machen. In der gewöhnlichen Spektralanalyse muss jedoch dann die Hauptdopplerlinie eine Reflexion der Räder darstellen.

Die Ausrichtung der Radarantenne rein auf die Räder der Fahrzeuge ist jedoch problematisch. Meist müssen die Verkehrserfassungsgeräte aus Sicherheitsgründen deutlich von der Fahrspur entfernt angebracht werden. Die variable Entfernung benötigt dann unterschiedliche Antennencharakteristika, um jeweils nur die Räder der Fahrzeuge durch den Radarstrahl abzudecken. Die maximale Bündelung der Antenne ist jedoch begrenzt. Auch ist eine hohe Montagegenauigkeit gefordert um exakt die Nabe der Räder als Bezugspunkt für die Radarkeule zu treffen. Wird die Radarkeule auch derart in Bodennähe betrieben, so kann bei hochgebauten Lastkraftwagen der Radarstrahl unter den Aufbau gerichtet sein und damit die fehlende Dopplerreflexion zu Unterbrechungen und damit zu Fehlern in der Detektion der Fahrzeuge führen.

### Offenbarung der Erfindung

Ziel der vorliegenden Erfindung ist es, ein Verfahren und eine Vorrichtung zur Detektion von Fahrzeugachsen bei Verkehrserfassungsgeräten unter Verwendung eines Radarsensors und einer Auswerteeinheit zu schaffen, das mit für Verkehrserfassungen üblichen Radarantennen und üblichem Montageaufwand Fahrzeugachsen zu erfassen gestattet.

Diese Aufgabe wird gelöst durch das in den unabhängigen Ansprüchen angegebene Verfahren und eine entsprechende Vorrichtung.

Das Ziel der Erfindung wird mittels Radarsensor und Auswerteeinheit durch folgendes Verfahren und folgende Vorrichtung realisiert: Fährt ein Fahrzeug durch den schräg über die Fahrbahn gerichteten Radarstrahl, so wird zuerst die Front des Fahrzeuges erfasst. Aus den Dopplersignalen wird in der Auswerteeinheit die Geschwindigkeit des Fahrzeuges ermittelt. Die Auswerteeinheit beinhaltet auch ein programmierbares Filter. Die Erfindung beruht auf dem neuen Ansatz, dass neben der gewöhnlichen Spektralanalyse in der Auswerteeinheit auch parallel die Radarreflexionen über ein programmierbares Filter geleitet werden, das als Hoch- oder Bandpaß dynamisch alle Bewegungen der Translation des Fahrzeuges entfernt und so nur die Rotationsbewegungen der Fahrzeugräder sichtbar macht, vorzugsweise das Geschwindigkeitsband von 1,3 bis zum 2fachen der Translationsbewegung des Fahrzeuges. Dieses Signal kann analog verstärkt werden um die Detektion des schwachen Signales eines Rades zu erleichtern. Die Detektion kann in der Auswerteeinheit analog durch einen Komparator oder in einem Prozessor nach Analog-Digital-Wandlung erfolgen.

Das programmierbare Filter kann rein als digitales Filter (wie in einem DSP) oder auch als Switched-Capacitor-Filter in diskreter Ausführung eingesetzt werden.

Durch die parallel laufende Achsendetektion kann die kontinuierliche Analyse des Gesamtsignals unbeeinträchtigt weiterlaufen und Fahrzeuglänge sowie Durchschnittsgeschwindigkeit ermittelt werden oder der Entfernungsverlauf während der Durchfahrt des Fahrzeuges durch den Radarstrahl unabhängig verfolgt werden.

Nach der Durchfahrt des Fahrzeuges wird aus Achsenzahl und Achsenposition, sowie aus weiteren Größen und Messdaten wie zum Beispiel Geschwindigkeit und Fahrzeuglänge das Fahrzeug klassifiziert.

Vorteilhafte Ausgestaltungen der Erfindung sind in den Unteransprüchen angegeben.

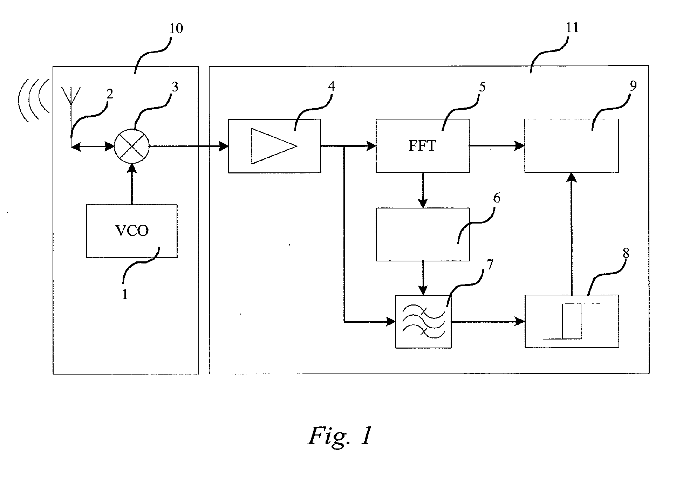

Die Erfindung wird nachstehend anhand eines in der beigeschlossenen Zeichnung dargestellten Ausführungsbeispiels näher erläutert, wobei Fig. 1 ein Blockschaltbild der im Rahmen des Verfahrens der Erfindung eingesetzten Komponenten zeigt.

Ein Oszillator samt Frequenzsteuerung (1) kann je nach Betriebsart die für CW-, FSK- oder FMCW-Betrieb erforderlichen Radarsignale erzeugen. Das generierte Signal wird über die Radarantenne (2) ausgestrahlt. Antenne (2) ist mit einem getrennten Sende- und Empfangsteil ausgeführt, um den Signal-Rausch-Abstand für das empfangene Signal zu erhöhen. Die empfangenen Radar-Reflexionen werden über einen Mischer (3) einer Signalaufbereitung (4) zugeführt.

In der Signalaufbereitung (4) wird das Signal verstärkt und gefiltert. Danach wird in der FFT-Einheit (5) das Signal durch einen Analog-Digital-Wandler digitalisiert und in ein Frequenzspektrum umgewandelt. In der Filtersteuerung (6) wird in einer Spektralanalyse nach Radarzielen gesucht.

Nach Identifikation eines neuen Fahrzeuges wird das programmierbare Filter (7) so eingestellt, dass nach Filterung des Radarsignals lediglich Frequenzen, ausgelöst durch die Rotationsbewegung eines Rades, im Geschwindigkeitsbereich oberhalb und bis zum doppelten Wert des gesamten Fahrzeuges übrig bleiben.

In einer Detektionseinheit (8) wird das Signal weiter verstärkt und anschließend mit einem Schwellwert verglichen. Dies geschieht entweder analog durch einen Schmitt-Trigger oder digital durch den Vergleich mit einem Wert deutlich oberhalb der Rauschgrenze, damit ein Detektionssignal eindeutig einer positiven Achsenerkennung zugeordnet werden kann.

Die positive Detektion wird an eine Auswerte- und Klassifikationseinheit (9) übergeben, wo auch die fortlaufende Spektralanalyse der FFT-Signale erfolgt. Nach vollständiger Durchfahrt eines Fahrzeuges wird aus allen zur Verfügung stehenden Daten das Fahrzeug einer Klasse zugeordnet und der Fahrzeugdatensatz gespeichert.

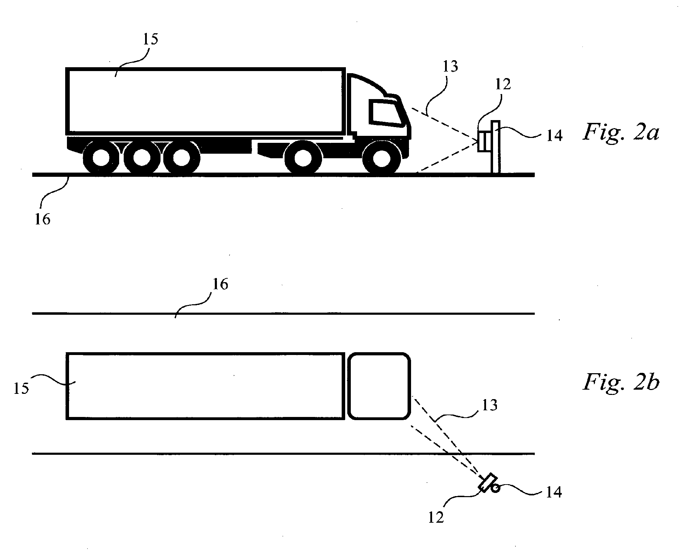

Fig. 2a zeigt in Seitenansicht die Anordnung einer Ausführungsform der vorliegenden Erfindung bei Verwendung in einem Verkehrserfassungsgerät (12), mit der zugehörigen Radarkeule (13), ausgerichtet auf ein Fahrzeug (15), montiert neben der Fahrbahn (16) und an einem Mast (14). Fig. 2b zeigt davon die Draufsicht.

### Bezugszeichenliste

- 1: Oszillator samt Frequenzsteuerung
- 2: Radarantenne
- 3: Mischer
- 4: Signalaufbereitung
- 5: FFT-Einheit
- 6: Filtersteuerung
- 7: Programmierbares Filter
- 8: Detektionseinheit
- 9: Auswerte- und Klassifikationseinheit
- 10: Radarsensor
- 11: Auswerteeinheit
- 12: Verkehrserfassungsgerät
- 13: Radarkeule
- 14: Mast
- 15: Fahrzeug
- 16: Fahrbahn

## Patentansprüche

1. Verfahren zur Detektion von Fahrzeugachsen bei Verkehrserfassungsgeräten (12) unter Verwendung eines Radarsensors (10) und einer Auswerteeinheit (11) mit einer fortlaufenden Spektralanalyse des Radarechos, **dadurch gekennzeichnet, dass** die Radarsignale nach Identifikation eines Fahrzeuges (15) durch ein programmierbares Filter (7) geleitet werden, das als Hoch- oder Bandpass durch eine Filtersteuerung (6) so eingestellt wird, dass nach Filterung des Radarechas lediglich Frequenzen, ausgelöst durch die Rotationsbewegung eines Rades im Geschwindigkeitsbereichoberhalb und bis zum doppelten Wert des Fahrzeugs übrig bleiben und nachfolgend aus dem restlichen Signal die Räder eines Fahrzeuges in einer Detektionseinheit (8) detektiert werden, indem das Ausgangssignal des Filters mit einem Schwellwert vergleichen wird.

2. Verfahren nach Anspruch 1, **dadurch gekennzeichnet, dass** durch das programmierbare Filter (7) und die Detektionseinheit (8) die Frequenzen, ausgelöst durch die Rotationsbewegung eines Rades, im Geschwindigkeitsbereich oberhalb und unterhalb der Fahrgeschwindigkeit des Fahrzeuges (15) zur gleichzeitigen Detektion eines Rades in zwei Frequenzbändern parallel in zwei Zweigen ausgewertet werden.

3. Verfahren nach einem der vorstehenden Ansprüche, **dadurch gekennzeichnet, dass** ein Oszillator samt Frequenzsteuerung (1) mit Frequency-Shift Keying (FSK) Modulation betrieben wird.

4. Verfahren nach einem der vorstehenden Ansprüche, **dadurch gekennzeichnet, dass** die Anzahl und die Position der detektierten Räder zur Klassifikation des Fahrzeuges verwendet werden.

5. Vorrichtung zur Detektion von Fahrzeugachsen bei Verkehrserfassungsgeräten (12) mit einem Radarsensor (10) und einer die Geschwindigkeit des Fahrzeugs aus einer fottlaufenden Spektralanalyse ermittelnden Auswerteeinheit (11), **dadurch gekennzeichnet, dass** sie weiterhin ein programmierbares Filter (7) aufweist, das abhängig von der ermittelten Fahrgeschwindigkeit des Fahrzeuges (15) von einer Filtersteuerung (6) derart gesteuert wird, dass nach Filterung des Radarsignals lediglich Frequenzen, ausgelöst durch die Rotationsbewegung eines Rades im Geschwindigkeitsbereich oberhalb und bis zum doppelten Wert des gesamten Fahrzeuges übrig bleiben, und dass in einer an das programmierbare Filter (7) angeschlossenen Detektionseinheit (8) das Ausgangssignal des Filters (7) mit einem Schwellwert verglichen wird.

6. Vorrichtung nach Anspruch 5, **dadurch gekennzeichnet, dass** die Auswerteeinheit (11), ausgenommen einer Signalaufbereitung (4), vollständig in einem digitalen Signalprozessor integriert wird.

## Claims

1. Method for the detection of vehicle axles with traffic detection equipment (12) using a radar sensor (10) and an evaluation unit (11) with a continuous spectral analysis of the radar echo, **characterized in that** the radar signals are filtered by a programmable filter (7) after the identification of a vehicle (15), which is adjusted as highpass or bandpass through a filter control (6), is set so that after filtering of the radar echo only frequencies caused by the rotational movement of a wheel in the above-speed range and to double the value of the driving speed of the vehicle (15) remain and subsequently from the remaining signal, the wheels of a vehicle in a detection unit (8) are detected by comparing the output signal of the filter (7) with a thresold value.

2. Method according to claim 1, **characterized in that** by the programmable filter (7) and the detection unit (8), the frequencies, caused by the rotational movement of a wheel, in the above speed range and below the running speed of the vehicle (15) for the simultaneous detection of a wheel in two frequency bands are evaluated parallel in two branches.

3. Method according to one of the preceding claims, **characterized in that** a oscillator including frequency control (1) is operated with Frequency-Shift Keying (FSK) modulation.

4. Method according to one of the preceding claims, **characterized in that** the number and the position of the wheels detected for the classification of the vehicle are used.

5. Device for the detection of vehicle axles with traffic detection equipment (12) with a radar sensor (10) and an evaluation unit (11) which determines the speed of the vehicle out of a continuous spectral analysis, **characterized in that** it further comprises a programmable filter (7), which is thus controlled from a filter control (6) depending on the detected traveling speed of the vehicle (15), that after filtering of the radar signal only frequencies caused by the rotational movement of a wheel in the above-speed range and to double the value of the driving speed of the vehicle (15) remain and that in an evaluation unit (8) connected to the programmable filter (7) the output signal of the filter (7) is compared with a thresold value.

6. Apparatus according to claim 5, **characterized in that** the evaluation unit (11), except the signal conditioning (4) is completely integrated into a digital signal processor.

## Revendications

1. Procédé pour la détection d'essieux du véhicule avec l'équipement de détection de trafic (12) en utilisant un capteur radar (10) et une unité d'évaluation (11) avec un analyse spectroscopique en continue, **caractérisé en ce que** les signaux radar après l'identification d'un véhicule (15) sont conduits vers un filtre programmable (7) qui est ajusté par une commande de filtre (6) comme passe-haute ou passe-bande, de telle sorte que après le filtrage du signal de radar seulement fréquences provoqués par le mouvement d'une roue dans l'intervalle ci-dessus, la vitesse et au double de la valeur de la vitesse de déplacement du véhicule de rotation (15) restent et ensuite à partir du signal restant, les roues d'un véhicule dans une unité de détection (8) peut être détecté en comparaisant le signal de sortie du filtre (7) avec une valeur de seuil.

2. Procédé selon la revendications 1, **caractérisé en ce que** par le filtre programmable (7) et une unité de détection (8), les fréquences, provoquées par le mouvement de rotation d'une roue, dans la plage de vitesses ci-dessus et en dessous de la vitesse de marche du véhicule (15) pour la détection simultanée d'une roue à deux bandes de fréquences parallèle à deux branches sont évaluées.

3. Procédé selon l'une des revendications précédentes, **caractérisé en ce que** un oscillateur comprenant la commande de fréquence (1) est acitonné avec la modulatin Frequency-Shift-Keying (FSK).

4. Procédé selon l'une des revendications précédentes, **caractérisé en ce que** le nombre et la position des roues détectées pour la classification du véhicule sont utilisés.

5. Dispositif pour la détection d'essieux du véhicule avec l'équipement de détection de la circulation (12) avec un capteur radar (10) et une unité d'évaluation (11), avec un analyse spectroscopique en continue, **caractérisé en ce que** les signaux radar **caractérisés en ce qu'**il comprend en outre un filtre programmable (7), qui dépend de la vitesse d'un véhicule (15) de déplacement à partir d'une commande de filtre (6) est commandée en telle sorte que après le filtrage du signal de radar seulement fréquences provoqués par le mouvement d'une roue dans l'intervalle ci-dessus, la vitesse et au double de la valeur de la vitesse de déplacement du véhicule de rotation (15) restent et que dans une unité de détection (8) connecté au filtre programmable (7) le signal de sortie du filtre (7) est comparé avec une valeur de seuil.

6. Appareil selon la revendication 5, **caractérisé en ce que** l'unité d'évaluation (11), sauf le signal conditionné (4) est complètement intégrée dans un processeur de signal numérique.
